# EUROPÄISCHE PATENTANMELDUNG

(11) **EP 1 273 647 A2**
(43) Veröffentlichungstag der Anmeldung: **08.01.2003**
(21) Anmeldenummer: 02004092.9
(22) Anmeldetag: 25.02.2002
(51) Int. Cl.: C10G 9/38, C01B 3/36

(54) **Verfahren und Vorrichtung zur partiellen Oxidation eines flüssigen Brennstoffs**

(30) Priorität: 03.07.2001 DE 10132205
(71) Anmelder: ROBERT BOSCH GMBH, 70442 Stuttgart (DE)
(72) Erfinder: Steiner, Dietmar, Dr., 73642 Welzheim (DE); Laqua, Ekkehard, Dr., 68794 Oberhausen (DE); Horstmann, Peter, 71229 Leonberg (DE)

(57) **Zusammenfassung**

Die vorliegende Erfindung betrifft ein Verfahren sowie eine Vorrichtung zur partiellen Oxidation (POX) eines flüssigen Brennstoffs, bei dem der flüssige Brennstoff über eine Brennstoffzuführungsleitung 6 einer Zerstäubungseinrichtung 2 zugeführt wird, in welcher der zugeführte flüssige Brennstoff zerstäubt wird, und bei dem zerstäubter Brennstoff einer Reaktionseinrichtung 4 zugeführt wird, in der die partielle Oxidation stattfindet. Zumindest in einem Teillastbetrieb der Reaktionseinrichtung 4 wird nur eine Teilmenge 11 des in der Zerstäubungseinrichtung 2 zerstäubten Brennstoffs der Reaktionseinrichtung 4 zugeführt, während ein Rest 12 des in der Zerstäubungseinrichtung 2 zerstäubten Brennstoffs über eine Brennstoffrückführungsleitung 14 aus der Zerstäubungseinrichtung 2 abgeführt wird.

## Beschreibung

### Stand der Technik

Die Erfindung betrifft ein Verfahren sowie eine Vorrichtung zur partiellen Oxidation (POX) eines flüssigen Brennstoffs. Bei einer partiellen Oxidation oder POX eines flüssigen Brennstoffs werden relativ lange HC-Ketten des flüssigen Brennstoffs in relativ kurze HC-Ketten umgewandelt, die weiterhin als Brennstoff verwendbar sind. Diese POX-Reaktionsprodukte können dabei als Gas und/oder Aerosol vorliegen. Beispielsweise kann eine derartige POX für einen ersten Prozeßschritt einer Reformierung des flüssigen Brennstoffs für eine Anwendung in oder bei Brennstoffzellen verwendet werden.

Eine POX kann beispielsweise mit einer Reaktion realisiert werden, die mit einer sogenannten "kalten Flamme" arbeitet, vergleiche z.B. einen Aufsatz von K. Lucka und H. Köhne "Usage of cold flames for the evaporation of liquid fuels" , 5^{th} international conference on technologies and combustion for a clean environment, Lissabon, Portugal, Juli 1999. Hierbei wird zerstäubter flüssiger Brennstoff mit einem gasförmigen Oxidator, z.B. Luft, bei relativ niedrigen Reaktionstemperaturen verbrannt. Dadurch wird der zugeführte Brennstoff nur teilweise oxidiert, wobei die sich ausbildenden Reaktionsprodukte selbst wieder aerosolförmige und/oder gasförmige Brennstoffe bilden. Diese mit kalter Flamme arbeitende Verbrennung kann als stabil ablaufende Reaktion durchgeführt werden.

Für spezielle Anwendungen, z.B. bei oder in Brennstoffzellen, besteht ein Bedürfnis nach einem POX-Verfahren bzw. nach einer POX-Vorrichtung, das bzw. die (auch) sehr kleine Brennstoffmassenströme partiell oxidieren kann. Beispielsweise soll eine Brennstoffzelle in einem unteren Leistungsbereich betrieben werden können, in dem diese nur eine sehr kleine Menge an POX-Reaktionsprodukten benötigt.

Herkömmliche POX-Verfahren und POX-Vorrichtungen, die mit einer Zerstäubungseinrichtung arbeiten, können Brennstoffmassenströme von z.B. weniger als 0,85 kg/h nicht oder nur sehr aufwendig und teuer realisieren.

### Vorteile der Erfindung

Das erfindungsgemäße POX-Verfahren mit den Merkmalen des Anspruchs 1 hat dem gegenüber den Vorteil, daß sehr kleine Brennstoffmassenströme partiell oxidiert werden können, wobei dies außerdem mit einem relativ geringen Aufwand und somit preiswert realisierbar ist. Da erfindungsgemäß nur eine Teilmenge des zerstäubten Brennstoffs einer Reaktionseinrichtung, in der die partielle Oxidation stattfindet, zugeführt wird, kann ein sehr kleiner Massenstrom an POX-Reaktionsprodukten erzielt werden, wobei grundsätzlich auf die Zerstäubungstechnik zur Verarbeitung größerer Massenströme zurückgegriffen werden kann. Durch die Erfindung wird erreicht, daß von dem relativ großen Massenstrom zerstäubten Brennstoffs lediglich eine tatsächlich benötigte, relativ geringe Teilmenge in die Reaktionseinrichtung gelangt, während der Rest zurückgeführt wird und insbesondere für eine erneute Zerstäubung bereitsteht. Die Erfindung nutzt somit bekannte und bewährte Zerstäubungstechniken aus, so daß der Aufwand zur Realisierung der Erfindung relativ gering ist.

Bei einer Weiterbildung kann die verwendete Zerstäubungseinrichtung eine Zerstäuberdüse aufweisen, die den zugeführten flüssigen Brennstoff zerstäubt und einen Strahl aus zerstäubtem Brennstoff erzeugt. Des weiteren ist eine Ausblendeinrichtung vorgesehen, die einen zentralen Kern des Strahls zur Reaktionseinrichtung durchläßt. Dieser Kern bildet somit die der Reaktionseinrichtung zugeführte Teilmenge des zerstäubten Brennstoffs. Die Ausblendeinrichtung blendet einen den Kern umgebenden Umfangsbereich des Strahls aus, so daß dieser Umfangsbereich den über eine Brennstoffrückführungsleitung aus der Zerstäubungseinrichtung abgeführten Rest des zerstäubten Brennstoffs bildet. Bei dieser Vorgehensweise wird zunächst in herkömmlicher Weise ein Strahl zerstäubten Brennstoffs erzeugt, wobei nur ein Teil dieses Strahls, nämlich der zentrale Kern zur Realisierung kleiner Brennstoffmassenströme in der POX-Reaktion verwendet wird. Somit können preiswerte und in der Praxis bewährte Zerstäubungsdüsen zur Herstellung des Strahls verwendet werden, mit denen relativ große Brennstoffmassenströme zerstäubt werden können. Mit Hilfe der Ausblendeinrichtung kann jedoch der Kern dieses Strahls beispielsweise auf einen Massenstrom von etwa 0,15 kg/h reduziert werden.

Bei einer Weiterbildung kann die Zuführung der Teilmenge des zerstäubten Brennstoffs zur Reaktionseinrichtung mittels einer Strömung eines gasförmigen Oxidators, z.B. Luft, erfolgen, welcher der Reaktionseinrichtung zugeführt wird und dabei die Teilmenge des zerstäubten Brennstoffs mitnimmt. Zweckmäßig kann diese Oxidator-Strömung drallbehaftet sein. Mit Hilfe dieser Merkmale kann ein für die POX-Reaktion benötigter Oxidator gemeinsam mit der Teilmenge des zerstäubten Brennstoffs in die Reaktionseinrichtung eingebracht werden, wobei gleichzeitig eine intensive Durchmischung des zerstäubten Brennstoffs mit dem Oxidator sowie ein optimaler Transport des zerstäubten Brennstoffs in die Reaktionseinrichtung gewährleistet werden kann.

Zweckmäßig findet in der Reaktionseinrichtung eine mit kalter Flamme arbeitende partielle Oxidation statt. Das erfindungsgemäße POX-Verfahren ermöglicht somit die Realisierung einer mit kalter Flamme arbeitenden POX-Reaktion bei sehr kleinen Massenströmen.

Das der Erfindung zugrundeliegende Problem wird auch durch eine Vorrichtung mit den Merkmalen des Anspruchs 6 gelöst. Auch hier beruht die Erfindung auf dem allgemeinen Gedanken, nur eine Teilmenge des zerstäubten Brennstoffs in die Reaktionseinrichtung einzuleiten. Somit kann die POX-Vorrichtung mit einer konventionellen und somit preiswerten Zerstäubungseinrichtung ausgestattet werden, die im Betrieb relativ große Brennstoffmassenströme zerstäubt. Durch die Ausblendeinrichtung kann dann der nicht benötigte Rest des erzeugten zerstäubten Brennstoffs ausgeblendet und rückgeführt werden.

Bei einer Weiterbildung kann eine Oxidatorzuführungseinrichtung vorgesehen sein, die eine Strömung eines gasförmigen Oxidators erzeugt, die so geführt ist, daß sie den von der Ausblendeinrichtung durchgelassenen Strahlkern mitnimmt und in die Reaktionseinrichtung transportiert. Auch hier erfüllt die Oxidator-Strömung eine Doppelfunktion, in dem sie einerseits den für die POX-Reaktion benötigten Oxidator, z.B. Luft, bereitstellt und andererseits gleichzeitig die Teilmenge des zerstäubten Brennstoffs in die Reaktionseinrichtung transportiert.

Durch eine entsprechende Ausgestaltung dieser Oxidatorzuführungseinrichtung können Oxidatorstrom und Brennstoff-Teilmenge gezielt geformt werden. Beispielsweise kann die Oxidatorzuführungseinrichtung Drallerzeugungsmittel aufweisen, welche die Oxidatorströmung mit einem Drall beaufschlagen.

Bei einer besonders vorteilhaften Ausführungsform kann die Ausblendeinrichtung eine Blende aufweisen, deren Blendenöffnung konzentrisch zum Strahl der Zerstäubungsdüse angeordnet ist. Die Ausblendeinrichtung besitzt somit einen besonders preiswerten Aufbau.

Um das Verhältnis zwischen durchgelassenem Kern und ausgeblendetem Umgebungsbereich, also zwischen durchgelassener Teilmenge und zurückbehaltenem Rest variieren bzw. modulieren zu können, kann die Blende beispielsweise hinsichtlich eines Abstandes zwischen Blende und Zerstäubungsdüse und/oder hinsichtlich ihres Blendenöffnungsquerschnitts einstellbar ausgebildet sein.

Die Zerstäubungsdüse der erfindungsgemäßen POX-Vorrichtung kann als Dralldüse oder Simplex-Düse oder als gasgestützte Düse ausgebildet sein. Somit greift die Erfindung auf bekannte, preiswerte Elemente zurück, mit denen an sich keine besonders kleinen Massenströme zerstäubt werden können.

Bei einer speziellen Weiterbildung kann die Reaktionseinrichtung der POX-Vorrichtung zur Durchführung einer mit kalter Flamme arbeitenden partiellen Oxidation ausgebildet sein. Dementsprechend ermöglicht die erfindungsgemäße POX-Vorrichtung die Durchführung einer mit kalter Flamme arbeitenden POX-Reaktion bei sehr kleinen Massenströmen.

Von besonderer Bedeutung ist hierbei die Verwendung des erfindungsgemäßen POX-Verfahrens bzw. der erfindungsgemäßen POX-Vorrichtung in oder für Brennstoffzellen. Hierdurch ist es möglich, eine oder mehrere Brennstoffzellen mit sehr kleinen Massenströmen an POX-Reaktionsprodukten zu versorgen, wodurch insbesondere ein Brennstoffzellenbetrieb mit kleiner Leistungsabgabe realisierbar ist.

Von besonderer Bedeutung ist außerdem eine Verwendung des erfindungsgemäßen POX-Verfahrens bzw. der erfindungsgemäßen POX-Vorrichtung in einem Heizgerät mit Gasbrenner. Hierdurch ist es möglich, alle Vorteile eines Gasbrenners, insbesondere hinsichtlich geringer Emissionswerte, Wartungsfreiheit, Flammenbild und Brennstoffverbrauch, auch dann auszunutzen, wenn nur flüssiger Brennstoff zur Verfügung steht, da dieser mit Hilfe der Erfindung in einen gasförmigen und/oder aerosolförmigen Brennstoff umgewandelt werden kann. Dabei ist außerdem die Brennerleistung des Gasbrenners bzw. die Heizleistung des Heizgeräts auch in sehr kleinen Leistungsbereichen einstellbar bzw. modulierbar.

Weitere wichtige Vorteile und Merkmale der Erfindung ergeben sich aus den Unteransprüchen, aus der Zeichnung und aus der zugehörigen Figurenbeschreibung anhand der Zeichnung.

### Zeichnung

Ein Ausführungsbeispiel der Erfindung ist in der Zeichnung dargestellt und wird im folgenden näher erläutert.

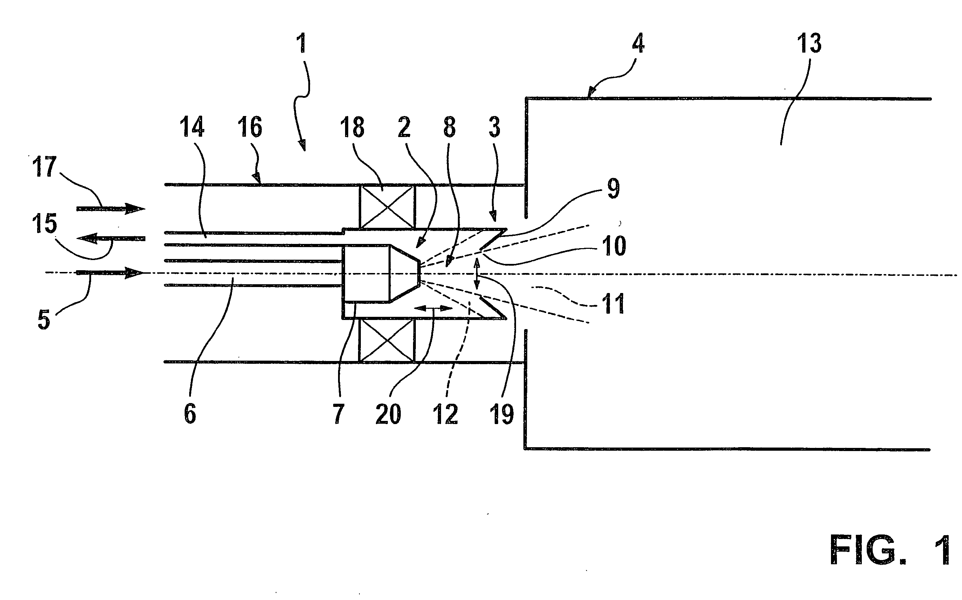

Die einzige Fig. 1 zeigt eine stark vereinfachte Prinzipdarstellung einer erfindungsgemäßen POX-Vorrichtung.

### Beschreibung des Ausführungsbeispiels

Entsprechend Fig. 1 besitzt eine erfindungsgemäße Vorrichtung 1 zur partiellen Oxidation, im folgenden POX-Vorrichtung genannt, eine Zerstäubungseinrichtung 2, eine Ausblendeinrichtung 3 und eine Reaktionseinrichtung 4. Entsprechend einem Pfeil 5 wird über eine Brennstoffzuführungsleitung 6 flüssiger Brennstoff z.B. von einem nicht dargestellten Brennstoffreservoir zu einer Zerstäubungsdüse 7 der Zerstäubungseinheit 2 gefördert. Die Zerstäubungsdüse 7 kann dabei z.B. als Dralldüse bzw. Simplex-Düse oder als gas- bzw. luftgestützte Düse ausgebildet sein. Die Zerstäubungsdüse 7 zerstäubt den zugeführten flüssigen Brennstoff und erzeugt dabei einen Strahl 8 aus zerstäubten Brennstoff.

Die Ausblendeinrichtung 3 weist eine ringförmige Blende 9 auf, die mit ihrer Blendenöffnung 10 konzentrisch zum Strahl 8 angeordnet ist. Bei der hier dargestellten Ausführungsform ist die Blende 9 bzw. die Ausblendeinrichtung 3 in die Zerstäubungseinrichtung 2 integriert. Die Blende 9 bewirkt, daß ein Kern 11 des Strahls 8 durch die Blendenöffnung 10 hindurchtreten kann, während ein den Kern 11 umgebender Umfangsbereich 12 des Strahls 8 ausgeblendet wird und somit nicht durch die Blendenöffnung 10 hindurchtreten kann. Der durch die Blendenöffnung 10 hindurchtretende Kern 11 bildet eine Teilmenge des zerstäubten Brennstoffs, die in einen Reaktionsraum 13 der Reaktionseinrichtung 4 gelangt. Im Unterschied dazu bildet der ausgeblendete Umfangsbereich 12 einen Rest, der sich in der Zerstäubungseinrichtung 2 sammelt und über eine entsprechend angeordnete Brennstoffrückführungsleitung 14 entsprechend einem Pfeil 15 aus der Zerstäubungseinheit 2 abtransportiert und vorzugsweise zum nicht dargestellten Brennstoffreservoir zurückgeführt wird.

Um die von der Ausblendeinrichtung 9 durchgelassene Teilmenge (Kern 11) variieren oder modulieren zu können, kann die Blende 9 mit nicht näher gezeigten Mitteln hinsichtlich ihres Blendenöffnungsquerschnitts entsprechend einem Doppelpfeil 19 und/oder hinsichtlich ihres Abstandes von der Zerstäubungsdüse 7 entsprechend einem Doppelpfeil 20 einstellbar sein.

Des weiteren besitzt die erfindungsgemäße POX-Vorrichtung 1 eine Oxidatorzuführungseinrichtung 16, die entsprechend einem Pfeil 17 einen gasförmigen Oxidator, z.B. Luft, in Form einer Strömung der Reaktionseinrichtung 4 zuführt. Dabei besitzt diese Oxidatorzuführungseinrichtung 16 hier Drallerzeugungsmittel 18, mit denen die Oxidatorströmung bezüglich einer axialen Ausbreitungsrichtung des Strahls 8 der Zerstäubungsdüse 7 mit einem Drall beaufschlagt wird. Die Oxidatorzuführungseinrichtung 16 ist konzentrisch zur Zerstäubungseinrichtung 2 angeordnet, derart, daß die von der Oxidatorzuführungseinrichtung 16 erzeugte Oxidatorströmung den Kern 11 des Strahls 8 vor dessen Eintritt in die Reaktionseinrichtung 4 erfaßt und mitnimmt bzw. mitreißt. Auf diese Weise wird einerseits der Transport des zerstäubten Brennstoffs in die Reaktionseinrichtung 4 gewährleistet, andererseits kann dadurch eine intensive Durchmischung des zerstäubten Brennstoffs mit dem Oxidator gewährleistet werden, wobei außerdem die in den Reaktionsraum 13 eintretende Strömung aus zerstäubtem Brennstoff und Oxidator hinsichtlich einer optimalen Verbrennung gestaltet werden kann.

Im Reaktionsraum 13 der Reaktionseinrichtung 4 findet dann die POX-Reaktion statt, wobei die Reaktionseinrichtung 4 vorzugsweise so ausgebildet ist, daß diese POX-Reaktion mit einer kalten Flamme arbeitet.

Durch die Positionierung und Dimensionierung der Blende 9 kann die der Reaktionseinrichtung 4 zugeführte Teilmenge (Kern 11) beeinflußt werden. Insbesondere ist es dadurch möglich, die POX-Reaktion mit einem sehr kleinen Brennstoffmassenstrom zu betreiben, so daß auch entsprechend kleine Massenströme an POX-Reaktionsprodukten entstehen. Dabei wird es bei der vorliegenden Erfindung als besonders vorteilhaft angesehen, daß hierzu konventionelle Komponenten, insbesondere eine konventionelle Zerstäubungsdüse 7, verwendet werden können, die an sich für einen Betrieb mit erheblich größeren Brennstoffmassenströmen dimensioniert sind. Mit Hilfe der Ausblendeinrichtung 3 kann der nicht benötigte Rest (Umfangsbereich 12) rückgeführt werden und ggf. zu einem späteren Zeitpunkt erneut zerstäubt werden. Durch die Verwendung an sich bekannter Komponenten ergibt sich ein relativ einfacher und preiswerter Aufbau für die erfindungsgemäße POX-Vorrichtung 1.

Die erfindungsgemäße POX-Vorrichtung 1 ermöglicht somit einen Betrieb mit sehr kleinen Brennstoffmassenströmen und eignet sich in besonderer Weise für einen Einsatz bei Brennstoffzellen und/oder bei Heizgeräten, die mit relativ geringen Leistungen betrieben werden sollen.

## Patentansprüche

1. Verfahren zur partiellen Oxidation (POX) eines flüssigen Brennstoffs, bei dem der flüssige Brennstoff über eine Brennstoffzuführungsleitung (6) einer Zerstäubungseinrichtung (2) zugeführt wird, in welcher der zugeführte flüssige Brennstoff zerstäubt wird, und bei dem zerstäubter Brennstoff einer Reaktionseinrichtung (4) zugeführt wird, in der die partielle Oxidation stattfindet, wobei zumindest in einem unteren Leistungsbereich der Reaktionseinrichtung (4) eine Teilmenge (11) des in der Zerstäubungseinrichtung (2) zerstäubten Brennstoffs der Reaktionseinrichtung (4) zugeführt wird, während der Rest (12) des in der Zerstäubungseinrichtung (2) zerstäubten Brennstoffs über eine Brennstoffrückführungsleitung (14) aus der Zerstäubungseinrichtung (2) abgeführt wird.

2. POX-Verfahren nach Anspruch 1,
**dadurch gekennzeichnet, daß** die Zerstäubungseinrichtung (2) eine Zerstäuberdüse (7) aufweist, die den zugeführten flüssigen Brennstoff zerstäubt und einen Strahl (8) aus zerstäubtem Brennstoff erzeugt, wobei eine Ausblendeinrichtung (3) einen zentralen Kern (11) des Strahls (8) zur Reaktionseinrichtung (8) durchläßt, der die der Reaktionseinrichtung (4) zugeführte Teilmenge bildet, und einen den Kern (11) umgebenden Umfangsbereich (12) des Strahls (8) ausblendet, der den über die Brennstoffrückführungsleitung (14) abgeführten Rest bildet.

3. POX-Verfahren nach Anspruch 1 oder 2,
**dadurch gekennzeichnet, daß** die Zuführung der Teilmenge (11) des zerstäubten Brennstoffs zur Reaktionseinrichtung (4) mittels einer Strömung eines gasförmigen Oxidators erfolgt, welcher der Reaktionseinrichtung (4) zugeführt wird und dabei die Teilmenge (11) mitnimmt.

4. POX-Verfahren nach Anspruch 3,
**dadurch gekennzeichnet, daß** die Strömung drallbehaftet ist.

5. POX-Verfahren nach einem der Ansprüche 1 bis 4,
**dadurch gekennzeichnet, daß** in der Reaktionseinrichtung (4) eine mit kalter Flamme arbeitende partielle Oxidation stattfindet.

6. Vorrichtung zur partiellen Oxidation (POX) eines flüssigen Brennstoffs, mit einer Brennstoffzuführungsleitung (6), die flüssigen Brennstoff zu einer Zerstäubungseinrichtung (2) führt, wobei die Zerstäubungseinrichtung (2) eine Zerstäuberdüse (7) aufweist, die aus dem zugeführten flüssigen Brennstoff einen Strahl (8) aus zerstäubtem Brennstoff erzeugt und diesen zu einer Reaktionseinrichtung (4) abstrahlt, wobei in der Reaktionseinrichtung (4) zerstäubter Brennstoff partiell oxidiert wird, wobei eine Ausblendeinrichtung (3) vorgesehen ist, die einen zentralen Kern (11) des Strahls (8) zur Reaktionseinrichtung (4) durchläßt und einen den Kern (11) umgebenden Umfangsbereich (12) des Strahls (8) ausblendet, wobei eine Brennstoffrückführungsleitung (14) den ausgeblendeten Umfangsbereich (12) aus der Zerstäubungseinrichtung (2) abführt.

7. POX-Vorrichtung nach Anspruch 6,
**dadurch gekennzeichnet, daß** eine Oxidatorzuführungseinrichtung (16) vorgesehen ist, die eine Strömung eines gasförmigen Oxidators erzeugt, die so geführt ist, daß sie den von der Ausblendeinrichtung (3) durchgelassenen Strahl-Kern (11) mitnimmt und in die Reaktionseinrichtung (4) transportiert.

8. POX-Vorrichtung nach Anspruch 7,
**dadurch gekennzeichnet, daß** die Oxidatorzuführungseinrichtung (16) Drallerzeugungsmittel (18) aufweist, welche die Oxidatorströmung mit einem Drall beaufschlagen.

9. POX-Vorrichtung nach einem der Ansprüche 6 bis 8,
**dadurch gekennzeichnet, daß** die Ausblendeinrichtung (3) eine Blende (9) aufweist, deren Blendenöffnung (10) konzentrisch zum Strahl (8) angeordnet ist.

10. POX-Vorrichtung nach Anspruch 9,
**dadurch gekennzeichnet, daß** die Blende (9) hinsichtlich eines Abstandes zwischen Blende (9) und Zerstäuberdüse (7) einstellbar ausgebildet ist.

11. POX-Vorrichtung nach Anspruch 9 oder 10,
**dadurch gekennzeichnet, daß** die Blende (9) hinsichtlich ihres Blendenöffnungsquerschnitts einstellbar ausgebildet ist.

12. POX-Vorrichtung nach einem der Ansprüche 6 bis 11,
**dadurch gekennzeichnet, daß** die Zerstäuberdüse (7) als Drall-Düse oder als gasgestützte Düse ausgebildet ist.

13. POX-Vorrichtung nach einem der Ansprüche 6 bis 12,
**dadurch gekennzeichnet, daß** die Reaktionseinrichtung (4) zur Durchführung einer mit kalter Flamme arbeitenden partiellen Oxidation ausgebildet ist.

14. Verwendung eines POX-Verfahrens nach einem der Ansprüche 1 bis 5 und/oder einer POX-Vorrichtung nach einem der Ansprüche 6 bis 13 in oder für Brennstoffzellen.

15. Verwendung eines POX-Verfahrens nach einem der Ansprüche 1 bis 5 und/oder einer POX-Vorrichtung nach einem der Ansprüche 6 bis 13 in einem Heizgerät mit Gasbrenner.
